# FASCICULE DE BREVET EUROPEEN

(11) **EP 3 693 222 B1**
(45) Date de publication et mention de la délivrance du brevet: **13.04.2022**
(21) Numéro de dépôt: 20156468.9
(22) Date de dépôt: 10.02.2020
(51) Int. Cl.: B60R 5/00, F16B 5/06, F16B 5/12, F16B 7/04

(54) **PORTE-BAGAGES DESTINÉ À ÉQUIPER UNE SALLE PASSAGER D'UN VÉHICULE DE TRANSPORT PUBLIC**
GEPÄCKABTEIL ZUR AUSSTATTUNG EINES PASSAGIERRAUMS EINES ÖFFENTLICHEN TRANSPORTFAHRZEUGS
LUGGAGE RACK INTENDED FOR EQUIPPING A PASSENGER ROOM OF A PUBLIC TRANSPORT VEHICLE

(30) Priorité: 11.02.2019 FR 1901341
(43) Date de publication de la demande: 12.08.2020
(73) Titulaire: ALSTOM Transport Technologies, 93400 Saint-Ouen (FR); SNCF Voyageurs, 93200 Saint-Denis (FR)
(72) Inventeur: TAVENEAU, Frédéric, Christian, Marc, 17220 LA JARNE (FR); MUSSAUD, Régis, 17220 SAINTE SOULLE (FR)
(74) Mandataire: Lavoix

(56) Documents cités:
- DE-U- 7 316 648
- DE-U1- 9 211 116
- FR-A1- 3 055 597

## Description

La présente invention concerne un porte-bagages destiné à équiper une salle passager d'un véhicule de transport public.

Le véhicule de transport public est par exemple un véhicule ferroviaire, notamment un véhicule ferroviaire grandes-lignes, ou un véhicule routier, notamment un autocar ou un bus.

Le porte-bagages est du type comportant une partie structurelle destinée à recevoir des bagages, la partie structurelle présentant une forme générale allongée dans une direction longitudinale, et s'étendant transversalement entre un bord de liaison destiné à être relié à une paroi de la salle passager, et un bord libre.

Un exemple de porte-bagage connu est décrit dans DE 7316648U. Ce document décrit un porte-bagages selon le préambule de la revandication 1.

Dans la présente description, on appellera « direction longitudinale » la direction longitudinale du véhicule. Il s'agit également de la direction dans laquelle le véhicule se déplace.

Par ailleurs, le terme « transversalement » s'applique à une direction sensiblement perpendiculaire à la direction longitudinale, et perpendiculaire à une direction verticale.

Le porte-bagages est habituellement configuré pour recevoir toute sorte de bagages, c'est-à-dire tout type d'objets ou d'effets emportés par un passager. Par exemple, le porte-bagages peut être un porte-veste.

Un tel porte-bagages est généralement agencé en hauteur, au-dessus de sièges pour les passagers. Ainsi, dans certaines configurations, il existe un risque pour un passager de se cogner contre le porte-bagages lorsqu'il se lève du siège ou lorsqu'il se rapproche de la paroi en position debout, par exemple en vue de s'asseoir sur le siège accolé à cette paroi.

L'invention a notamment pour but de réduire l'inconfort du passager en cas d'un tel choc, et notamment de réduire fortement le risque de blessure.

A cet effet, l'invention a notamment pour objet un porte-bagages selon la revendication 1.

A la base de l'invention, il a été constaté qu'en cas de choc, le passager se cogne le plus souvent contre le bord libre de la partie structurelle.

Conformément à l'invention, le bord libre porte un élément d'absorption de choc, susceptible d'amortir un choc. Ainsi, le passager ne ressent pas de douleur en cas de choc, et surtout ne risque pas de blessure.

Un porte-bagages selon l'invention peut comporter en outre l'une ou plusieurs des caractéristiques suivantes, prises seules ou selon toutes combinaisons techniquement envisageables.
- La partie structurelle est formée par un panneau inférieur et un panneau supérieur assemblés ensemble, les panneaux inférieur et supérieur délimitant, à proximité du bord libre, une gorge dans laquelle l'élément d'absorption de choc est en partie logé.
- L'élément d'absorption de choc est en partie pincé entre les panneaux inférieur et supérieur.
- Les panneaux inférieur et supérieur sont assemblés par vissage.
- La partie structurelle présente une première couleur, et l'élément d'absorption de choc comporte une partie apparente présentant une seconde couleur différente de la première couleur.
- L'élément d'absorption de choc comporte une partie apparente, présentant une surface de forme générale arrondie.
- L'élément d'absorption de choc est assemblé de manière amovible à la partie structurelle du porte-bagages.
- Les panneaux inférieur et supérieur présentent, dans la gorge, des nervures configurées pour coopérer avec des encoches complémentaires ménagées dans l'élément d'absorption de choc.

L'invention concerne également un véhicule de transport public, notamment véhicule ferroviaire ou véhicule routier, comportant au moins une salle passagers, caractérisé en ce que la salle passagers comporte au moins un porte-bagages tel que défini précédemment.

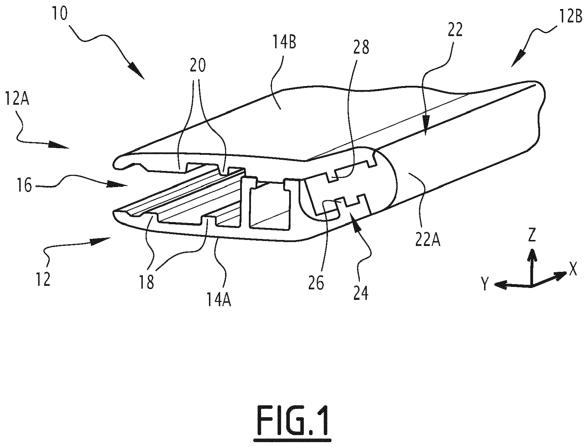

D'autres aspects et avantages de l'invention seront mis en lumière à la lecture de la description qui va suivre, donnée uniquement à titre d'exemple et faite en se référant à la [Fig 1] figure unique annexée, représentant partiellement, en perspective, un porte-bagages selon un exemple de mode de réalisation de l'invention.

On a représenté partiellement, sur la figure, un porte-bagages 10, destiné à équiper une salle passager d'un véhicule de transport public, notamment d'un véhicule ferroviaire ou d'un véhicule routier.

Le porte-bagages 10 est destiné à recevoir des bagages emportés par les passagers du véhicule. Par « bagages », on entend tout objet ou effet emporté par les passagers, et inclut ainsi par exemple des sacs, valises, vêtements et notamment vestes.

Le type de bagages peut varier en fonction des dimensions du porte-bagages 10. En particulier, dans certains véhicules, le porte-bagages 10 n'est pas dimensionné pour recevoir des sacs volumineux. De tels porte-bagages sont également appelés « porte-vestes ».

Le porte-bagages 10 est destiné à être agencé au-dessus de sièges, afin de recevoir des bagages disposés sur ce porte-bagages.

Le porte-bagages 10 comporte une partie structurelle 12 destinée à recevoir les bagages (notamment des sacs, valises, vestes, etc.). Cette partie structurelle 12 est suffisamment rigide et robuste pour supporter une pluralité de bagages, parfois de masse importante.

La partie structurelle 12 présente une forme générale allongée dans une direction longitudinale X. Cette direction longitudinale X est la direction longitudinale du véhicule de transport public.

Par ailleurs, la partie structurelle 12 s'étend dans une direction transversale Y entre un bord de liaison 12A destiné à être relié à une paroi de la salle passager, et un bord libre 12B. La direction transversale Y est perpendiculaire à la direction longitudinale X, et à une direction verticale Z.

Le bord de liaison 12A est relié à la paroi par l'intermédiaire d'un élément de liaison en forme de planche (non représenté).

Avantageusement, la partie structurelle 12 est formée par un panneau inférieur 14A et un panneau supérieur 14B assemblés ensemble. De préférence, ces panneaux inférieur 14A et supérieur 14B sont assemblés de manière amovible, c'est-à-dire qu'ils peuvent être démontés et réassemblés sans être détériorés. Par exemple, les panneaux inférieur 14A et supérieur 14B sont assemblés par vissage.

Les panneaux inférieur 14A et supérieur 14B délimitent, à proximité du bord de liaison 12A, une première gorge 16 destinés à recevoir l'élément de liaison en forme de planche. Cet élément de liaison est enserré entre les panneaux inférieur 14A et supérieur 14B. De préférence, les panneaux inférieur 14A et supérieur 14B présentent, dans la première gorge 16, des nervures 18, 20 optimisant le maintien de l'élément de liaison dans la première gorge 16, par exemple en coopérant avec des encoches complémentaires ménagées dans l'élément de liaison.

Le porte-bagages 10 selon l'invention comporte par ailleurs un élément d'absorption de choc 22, porté par le bord libre 12B, et s'étendant sensiblement sur toute la longueur de ce bord libre 12B.

L'élément d'absorption de choc 22 comporte une partie apparente 22A, s'étendant en saillie au-delà du bord libre 12B dans la direction transversale.

Avantageusement, la partie apparente 22A est souple. La souplesse de la partie apparente 22A de l'élément d'absorption de choc 22 est choisie de manière à permettre l'absorption d'un choc, de sorte qu'un passager se cognant contre cet élément d'absorption de choc 22 ne ressente qu'une gêne modérée, et ne subisse aucune blessure.

Par exemple, le facteur d'amortissement, avec la mise en oeuvre de l'élément d'absorption de choc 22, est quatre à cinq fois supérieure au facteur d'amortissement d'un porte-bagages classique.

Par exemple, l'élément d'absorption de choc 22 est réalisé en caoutchouc.

Par ailleurs, la partie apparente 22A présente une surface apparente de forme générale arrondie autour d'un axe parallèle à la direction longitudinale X, ne présentant aucune arrête. Cette forme arrondie diminue encore le risque de blessure en cas d'un choc avec le porte-bagages.

Avantageusement, les panneaux inférieur 14A et supérieur 14B délimitent ensemble, à proximité du bord libre 12B, une seconde gorge 24 dans laquelle l'élément d'absorption de choc 22 est en partie logé.

Conformément à l'exemple décrit, l'élément d'absorption de choc 22 est en partie enserré entre les panneaux inférieur 14A et supérieur 14B. De préférence, les panneaux inférieur 14A et supérieur 14B présentent, dans la seconde gorge 24, des nervures 26, 28 optimisant le maintien de l'élément d'absorption de choc 22 dans la seconde gorge 24, par exemple en coopérant avec des encoches complémentaires ménagées dans l'élément d'absorption de choc 22.

La partie apparente 22A de l'élément d'absorption de choc 22 est sa partie qui n'est pas logée dans la seconde gorge 24.

De préférence, l'élément d'absorption de choc 22 est assemblé de manière amovible avec la partie structurelle 12 c'est-à-dire qu'il peut être démonté de la partie structurelle 12 et réassemblé avec cette partie structurelle 12, sans être détérioré.

Par exemple, l'élément d'absorption de choc 22 est maintenu dans la seconde gorge 24 par pincement entre les panneaux inférieur 14A et supérieur 14B, qui sont, comme indiqué précédemment, avantageusement vissés l'un avec l'autre.

Ainsi, lors du montage, l'élément d'absorption de choc 22 est disposé sur le panneau inférieur 14A, avant que le panneau supérieur 14B soit rapporté sur le panneau inférieur 14A et assemblé avec celui-ci, l'élément d'absorption de choc 22 se retrouvant pincé entre le panneau inférieur 14A et le panneau supérieur 14B, dans la seconde gorge 24.

Conformément à une variante, l'élément d'absorption de choc 22 pourrait être assemblé de manière non amovible avec la partie structurelle 12, par exemple par collage.

Avantageusement, la partie structurelle 12 présente une première couleur, et l'élément d'absorption de choc 22 présente une seconde couleur différente de la première couleur.

Cette différence de couleur permet de résoudre le problème technique consistant à rendre le porte-bagages 10 plus visible pour un passager, attirant son attention pour réduire le risque de choc accidentel de ce passager contre le porte-bagages 10.

Ainsi, le porte-bagages 10 réduit d'une part les risques de choc, mais en outre réduit les risques de blessures en cas de choc.

On notera que l'invention n'est pas limitée au mode de réalisation précédemment décrit, mais pourrait présenter diverses variantes sans sortir du cadre des revendications.

## Revendications

1. Porte-bagages (10) destiné à équiper une salle passager de véhicule de transport public, comportant une partie structurelle (12) destinée à recevoir des bagages, la partie structurelle (12) présentant une forme générale allongée dans une direction longitudinale (X), et s'étendant transversalement entre un bord de liaison (12A) destiné à être relié à une paroi de la salle passager, et un bord libre (12B), le porte-bagages (10) comportant un élément d'absorption de choc (22), porté par le bord libre (12B), et s'étendant sensiblement sur toute la longueur de ce bord libre (12B), **caractérisé en ce que** la partie structurelle (12) est formée par un panneau inférieur (14A) et un panneau supérieur (14B) assemblés ensemble, les panneaux inférieur (14A) et supérieur (14B) délimitant, à proximité du bord libre, une gorge (24) dans laquelle l'élément d'absorption de choc (22) est en partie logé.

2. Porte-bagages (10) selon la revendication 1, dans lequel l'élément d'absorption de choc (22) est en partie pincé entre les panneaux inférieur (14A) et supérieur (14B).

3. Porte-bagages (10) selon la revendication 1 ou 2, dans lequel les panneaux inférieur (14A) et supérieur (14B) sont assemblés par vissage.

4. Porte-bagages (10) selon l'une quelconque des revendications précédentes, dans lequel la partie structurelle (12) présente une première couleur, et l'élément d'absorption de choc (22) comporte une partie apparente (22A) présentant une seconde couleur différente de la première couleur.

5. Porte-bagages (10) selon l'une quelconque des revendications précédentes, dans lequel l'élément d'absorption de choc (22) comporte une partie apparente (22A), présentant une surface de forme générale arrondie.

6. Porte-bagages (10) selon l'une quelconque des revendications précédentes, dans lequel l'élément d'absorption de choc (22) est assemblé de manière amovible à la partie structurelle (12) du porte bagages (10).

7. Porte-bagages (10) selon l'une quelconque des revendications précédentes, dans lequel les panneaux inférieur (14A) et supérieur (14B) présentent, dans la gorge (24), des nervures (26, 28) configurées pour coopérer avec des encoches complémentaires ménagées dans l'élément d'absorption de choc (22).

8. Véhicule de transport public, notamment véhicule ferroviaire ou véhicule routier, comportant au moins une salle passagers, **caractérisé en ce que** la salle passagers comporte au moins un porte-bagages (10) selon l'une quelconque des revendications précédentes.

## Patentansprüche

1. Gepäckträger (10), der dazu bestimmt ist, einen Fahrgastraum eines öffentlichen Verkehrsfahrzeugs auszustatten, umfassend einen strukturellen Abschnitt(12), der dazu bestimmt ist, Gepäck aufzunehmen, wobei der strukturelle Abschnitt (12) eine allgemeine Form aufweist, die in einer Längsrichtung (X) länglich ist und sich quer zwischen einem Verbindungsrand (12A), der dazu bestimmt ist, mit einer Wand des Fahrgastraums verbunden zu sein, und einem freien Rand (12B) erstreckt, der Gepäckträger (10) umfassend ein stoßdämpfendes Element (22), das von dem freien Rand (12B) getragen wird und sich im Wesentlichen über die gesamte Länge von diesem freien Rand (12B) erstreckt, **dadurch gekennzeichnet, dass** der strukturelle Abschnitt (12) durch eine untere Platte (14A) und eine obere Platte (14B) gebildet wird, die zusammengefügt sind, wobei die untere Platte (14A) und die obere Platte (14B) in der Nähe des freien Rands eine Nut (24) begrenzen, in der das stoßabsorbierende Element (22) teilweise aufgenommen ist.

2. Gepäckträger (10) nach Anspruch 1, wobei das stoßdämpfende Element (22) teilweise zwischen der unteren (14A) und der oberen (14B) Platte eingeklemmt ist.

3. Gepäckträger (10) nach Anspruch 1 oder 2, wobei die untere (14A) und die obere (14B) Platte durch Verschrauben zusammengefügt werden.

4. Gepäckträger (10) nach einem der vorherigen Ansprüche, wobei der strukturelle Abschnitt (12) eine erste Farbe aufweist und das stoßabsorbierende Element (22) einen sichtbaren Abschnitt (22A) aufweist, der eine zweite Farbe aufweist, die sich von der ersten Farbe unterscheidet.

5. Gepäckträger (10) nach einem der vorherigen Ansprüche, wobei das stoßabsorbierende Element (22) einen sichtbaren Abschnitt (22A) umfasst, der eine allgemein abgerundete Oberflächenform aufweist.

6. Gepäckträger (10) nach einem der vorherigen Ansprüche, wobei das stoßdämpfende Element (22) lösbar mit dem strukturellen Abschnitt (12) des Gepäckträgers (10) verbunden ist.

7. Gepäckträger (10) nach einem der vorherigen Ansprüche, wobei die untere (14A) und die obere (14B) Platte in der Nut (24) Rippen (26, 28) aufweisen, die konfiguriert sind, um mit komplementären Kerben zusammenzuwirken, die in dem stoßabsorbierenden Element (22) gebildet sind.

8. Fahrzeug des öffentlichen Verkehrs, insbesondere Schienenfahrzeug oder Straßenfahrzeug, umfassend mindestens einen Fahrgastraum, **dadurch gekennzeichnet, dass** der Fahrgastraum mindestens einen Gepäckträger (10) nach einem der vorherigen Ansprüche aufweist.

## Claims

1. A luggage rack (10) for fitting to a passenger compartment of a public transport vehicle, comprising a structural part (12) for receiving luggage, the structural part (12) having a generally elongated shape in a longitudinal direction (X), and extending transversely between a connecting edge (12A) for connection to a wall of the passenger compartment, and a free edge (12B), the luggage rack (10) comprising a shock-absorbing element (22) carried by the free edge (12B) and extending substantially across the entire length of that free edge (12B), **characterised in that** the structural part (12) is formed by a lower panel (14A) and an upper panel (14B) joined together, the lower (14A) and upper (14B) panels defining, in the vicinity of the free edge, a groove (24) in which the shock-absorbing element (22) is partially housed.

2. The luggage rack (10) according to claim 1, wherein the shock-absorbing element (22) is partly clamped between the lower (14A) and upper (14B) panels.

3. The luggage rack (10) according to claim 1 or 2, wherein the lower (14A) and upper (14B) panels are screwed together.

4. The luggage rack (10) according to any one of the preceding claims, wherein the structural part (12) has a first colour, and the shock-absorbing element (22) has an exposed part (22A) with a second colour different from the first colour.

5. The luggage rack (10) according to any one of the preceding claims, wherein the shock-absorbing element (22) has an exposed part (22A), having a generally rounded surface.

6. The luggage rack (10) according to any one of the preceding claims, wherein the shock-absorbing element (22) is removably connected to the structural part (12) of the luggage rack (10).

7. The luggage rack (10) according to any one of the preceding claims, wherein the lower (14A) and upper (14B) panels have ribs (26, 28) in the groove (24) configured to mate with complementary notches in the shock-absorbing member (22).

8. A public transport vehicle, in particular a rail vehicle or a road vehicle, comprising at least one passenger compartment, **characterised in that** the passenger compartment comprises at least one luggage rack (10) according to any of the preceding claims.
